Europäisches Patentamt

European Patent Office

Office européen des brevets

(19)

(11) Veröffentlichungsnummer: **0 293 545 B1**

(12) **EUROPÄISCHE PATENTSCHRIFT**

(45) Veröffentlichungstag der Patentschrift: **17.06.92**

(21) Anmeldenummer: **88101382.5**

(22) Anmeldetag: **01.02.88**

(51) Int. Cl.⁵: **C03B 5/00**, C03B 5/235,
C03B 3/00, C03B 5/027,
C03B 5/193, C03B 5/225,
C03B 5/04, C03B 5/18

(54) Energiesparendes Verfahren zum Schmelzen von Glas und Glasschmelzofen zur Durchführung dieses Verfahrens.

(30) Priorität: **30.05.87 DE 3718276**

(43) Veröffentlichungstag der Anmeldung:
**07.12.88 Patentblatt  88/49**

(45) Bekanntmachung des Hinweises auf die
Patenterteilung:
**17.06.92 Patentblatt  92/25**

(84) Benannte Vertragsstaaten:
**AT BE CH DE ES FR GB IT LI NL SE**

(56) Entgegenhaltungen:
EP-A- 0 086 859     EP-A- 0 186 972
EP-A- 0 230 492     DE-C- 806 883
FR-A- 609 269       FR-A- 743 978
FR-A- 2 348 161     FR-A- 2 558 820
FR-A- 2 558 821     GB-A- 325 238
US-A- 2 122 469     US-A- 2 513 732
US-A- 2 616 221     US-A- 2 640 859
US-A- 2 658 095     US-A- 2 680 772
US-A- 3 198 618     US-A- 4 001 001
US-A- 4 410 347

(73) Patentinhaber: **BETEILIGUNGEN SORG GMBH
& CO. KG**
**Postfach 520, Stoltestrasse 23**
**W-8770 Lohr am Main(DE)**

(72) Erfinder: **Pieper, Helmut**
**Buchenstrasse 19**
**W-8770 Lohr/Main(DE)**

(74) Vertreter: **Schulze Horn, Stefan, Dipl.-Ing.
M.Sc. et al**
**Goldstrasse 36**
**W-4400 Münster(DE)**

**Beschreibung**

Die Erfindung betrifft ein energiesparendes Verfahren zum Schmelzen von Glas in einem Glasschmelzofen, in dein das Gemenge in einem Schmelzteil aufgeschmolzen, in einem an das Schmelzteil anschließenden Läuterteil geringer Badtiefe geläutert, danach in einem daran anschliessenden Homogenisierungteil erhöhter Badtiefe homogenisiert und daraus abgezogen wird, wobei der Abzug der Brenngase und die Gemengeeingabe am Anfang des Schmelzteils erfolgt und unter der Gemengeeingabe Energie durch Elektroden zugeführt wird, mit im Läuterteil angeordneten Brennern zur Zuführung von Energie, mit Wärmeaustauschern zum Energieaustausch zwischen den Verbrennungsgasen und der den Brennern zugeführten Verbrennungsluft und einen Glasschmelzofen, mit einem Schmelzteil, einem an das Schmelzteil anschließenden Läuterteil geringer Badtiefe, einem daran anschließenden Homogenisierungteil erhöhter Badtiefe, das mit einem Auslaß für das Glas versehen ist, mit einer am Anfang des Schmelzteils angeordneten Einrichtung zur Aufgabe des Gemenges und unter der Gemengeaufgabe angeordnete Elektroden zur Zuführung von Energie, mit im Läuterteil angeordneten Brennern zur Zuführung von fossiler Energie, mit Wärmeaustauschern zum Energieaustausch zwischen den Verbrennungsgasen und der den Brennern zugeführten Verbrennungsluft.

Glasschmelzöfen haben allgemein, obwohl sie mit Rekuperatoren oder Regeneratoren arbeiten, den Nachteil, eines relativ geringen Wirkungsgrades. Dies liegt nicht an der mangelnden Isolation der Glaswannen, sondern daran, daß die Abgaswärme die zur Vorheizung der Verbrennungsluft benötigten Wärmeenergie erheblich übersteigt. Einer Erhöhung der Temperatur der Verbrennungsluft sind dabei Grenzen gesetzt, da dadurch der Wärmeaustausch sehr aufwendig wird, insbesondere aber nachteilig die Konzentration des giftigen $NO_x$ stark steigt.

Um den Wärmeüberschuß im Abgas sinnvoll zu nutzen, hat es bereits verschiedene Versuche gegeben, auch das Gemen ge vor dem Einbringen in die Glasschmelzwanne vorzuheizen. Diese Versuche waren aber erfolglos, da durch die Aufheizung bereits ein Vorschmelzen von einigen Gemengebestandteilen auftreten kann, wodurch die Wärmeaustauschflächen verkleben und zum anderen bei direktem Kontakt des Abgases mit dem Gemenge neben dem Vorschmelzen bestimmter Bestandteile auch noch ein Entmischen auftritt bzw. bestimmte Gemengebestandteile mitgenommen werden, wodurch der Staubgehalt im Abgas unzulässig erhöht wird bzw. sehr aufwendige Staubfilter erforderlich werden.

Aus der EP-A1-0 230 492 ist bereits ein Glasschmelzofen mit einem verbesserten Wirkungsgrad bekannt, der dadurch erreicht wird, daß die Brennergase die auf der Schmelze schwimmende Gemengeschicht in einem großen Bereich überstreicht und dabei abgekühlt wird. Die verbleibende und bereits verringerte Wärmeenergie wird dann in Wärmetauschern an die Verbrennungsluft abgegeben.

Nachteilig ist bei diesem Ofen aber, daß Gemenge in den Läuterteil und in den Homogenisierungteil gelangen kann und dadurch die Glasqualität nicht ausreichend ist.

Aus der US-A-3 198 618 geht ein weiterer Glasschmelzofen hervor, bei dem die Verbrennungsgase die auf der Schmelze schwimmende Gemengeschicht überstreichen. Auch hier ist nachteilig kein Läuterteil vorhanden, in welchem das Glas ausreichend geläutert wird, sondern durch den Einsatz von Bubblern wird eine vertikale Umlaufströmung gefördert, die verunreinigtes Glas oder mit Gemenge vermischtes Glas in die Arbeitswanne gelangen läßt.

Es ist demgegenüber Aufgabe der Erfindung, ein Verfahren zum Schmelzen von Glas und einen Glasschmelzofen zu schaffen, denen die genannten Nachteile nicht mehr anhaften, wobei der verwendete Ofen gegenüber bekannten Öfen einen erheblich verbesserten Wirkungsgrad aufweisen soll, gleichwohl aber wirtschaftlich zu erstellen ist und bei dem insbesondere geringe $NO_x$-Konzentrationen sowie ein geringerer Staubgehalt im Abgas vorliegt, ohne daß schwierig zu beherrschende eine hohe Temperatur aufweisende Bauteile im Ofen oder für den Wärmetausch notwendig werden.

Die Oberofentemperatur und die Temperatur in den verwendeten Wärmetauschern (Rekuperatoren) sollen sogar geringer als bei den üblichen, bekannten Öfen sein.

Über die genannten Vorteile hinaus soll der erfindungsgemäße Ofen wirtschaftlich herstellbar und betriebssicher zu fahren sein, wobei im Bedarfsfall ein weitgehender Austausch von fossiler und elektrischer Energie möglich sein soll.

Diese Aufgabe wird bei einem Verfahren der eingangs genannten Art erfindungsgemäß dadurch gelöst, daß die überwiegende Schmelzenergiezuführung durch Brenner fossilen Brennstoffs im Läuterteil erfolgt, die Rauchgase den Schmelzteil im Gegenstrom zu dem Gemenge überstreichen, nahe der Gemengeaufgabe abgezogen werden und das Schmelzteil an der Oberfläche durch eine aus dem Läuterteil kommende Strömung im Gegenstrom zu dem Gemenge durchströmt wird und daß Maßnahmen vorhanden sind, die die Flammstrahlung aus dem Läuterteil an dessen Grenze und über dem Schmelzteil absorbieren, wodurch der Raum über der Schmelze in Zonen unterschiedlicher Temperatur unterteilt wird, in denen die höchste Temperatur im Läuterteil vorliegt.

Vorteilhaft wird das Verfahren dabei so durchgeführt, daß im Läuterteil (Zone I) mit der höchsten Temperatur die Brenner zur Verringerung der Stickoxydbildung mit Luftunterschuß und in dem von der Rauchgasströmung her gesehen nächsten Teil (Zone II) geringerer Temperatur die an der Einströmung angeordneten Brenner zur Vervollständigung der Verbrennung mit Luftüberschuß gefahren werden.

Bei einem Glasschmelzofen der eingangs genannten Art erfolgt die Lösung der erfindungsgemäßen Aufgabe derart, daß zur Ausbildung der heißen Strömung als Gegenstrom zur Gemengebewegung der Schmelzteil-Boden vom Läuterteil zur Gemengeeingabe hin abfällt und die Decke des Ofens zwischen dem Läuterteil (Zone I) und dein Schmelzteil (Zone II) mindestens einen sich bis kurz über die Badoberfläche erstreckenden Strahlungsschutzwall aufweist.

Vorteilhaft bewirken weiterhin unter der Gemengeaufgabe angeordnete Elektroden, daß sich neben ihnen zum Läuterteil hin eine absteigende Strömung bildet, die den Heißglasstrom im Schmelzteil nach unten umlenkt, wodurch die am Boden verlaufende Rückströmung zum Läutelteil hin verstärkt wird.

Die den Wirkungsgrad herabsetzende Wärmeübertragung durch Strahlung aus dem Brennerteil wird vorteilhaft durch die zwischen Läuter- und Schmelzteil und in dem Schmelzteil angebrachten Strahlungsschutzwälle verhindert.

Der besondere Vorteil des erfindungsgemäßen Verfahrens und Glasschmelzofens besteht darin, daß die Abgase unter Vorwärmung des auf dem Glasbad aufliegenden Gemenges bis zum Austritt aus dein Wannenraum auf 800 - 1000 °C abgekühlt werden und ohne größeren technischen Aufwand die Rekuperatoren dabei die Luft im Gegenstrom auf ca. 700 °C aufheizen können.

Ersichtlicherweise vermag der erfindungsgemäße Glasschmelzofen in Verbindung mit dem Verfahren zu seinem Betrieb die anstehenden Probleme in besonders vorteilhafter Weise und erstmalig zu lösen. Das erfindungsgemäße Prinzip besteht dabei darin, das Gemenge auf das Glasbad aufzubringen und dort durch das Abgas vorzuwärmen und dabei das Abgas soweit abzukühlen, daß die verbliebene Energie fast vollständig zur Aufheizung der Verbrennungsluft verwendet werden kann. Das Flüssigbleiben des Glases und die Einstellung eines optimalen Strömungsfeldes in dem Gemenge-Vorwärmbereich der Wanne wird dabei durch die Zugabe von vergleichsweise geringen Mengen elektrischer Energie gewährleistet.

Weitere vorteilhafte Ausgestaltungen der Erfindung sind in den Unteransprüchen 3 bis 5 und 7 bis 10 genannt.

Im folgenden werden Ausführungsbeispiele der Erfindung anhand von Zeichnungen näher erläutert. Es zeigen:

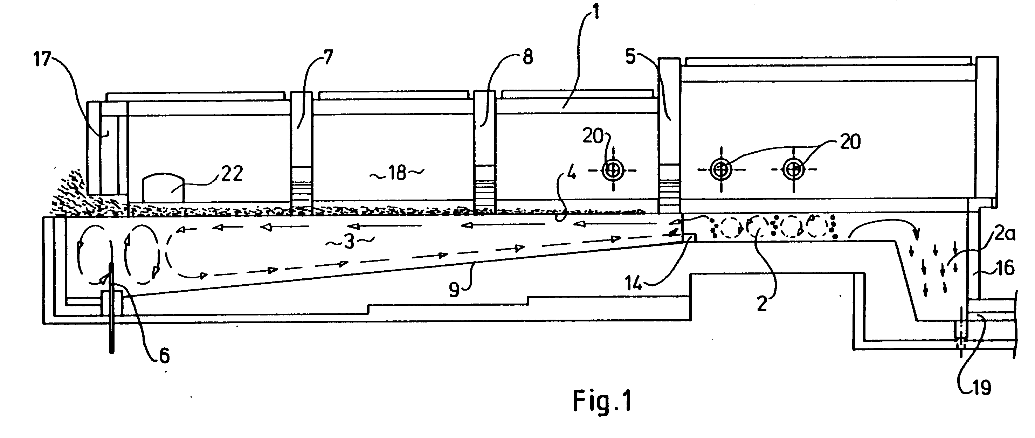

Figur 1    einen Längsschnitt durch eine Glaswanne gemäß der Erfindung,

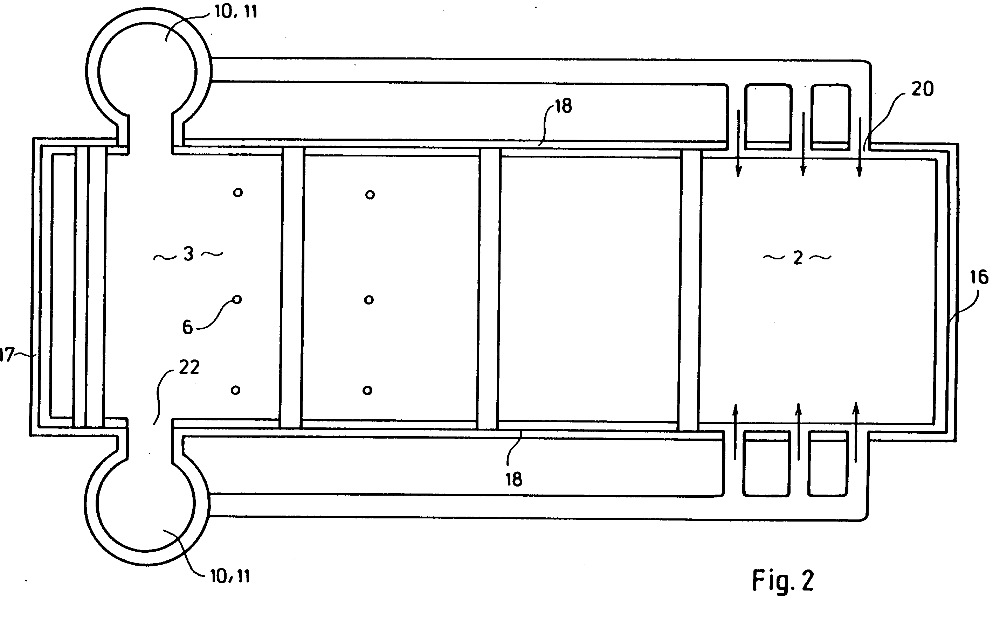

Figur 2    einen Horizontalschnitt durch eine Wanne ähnlich Figur 1 und

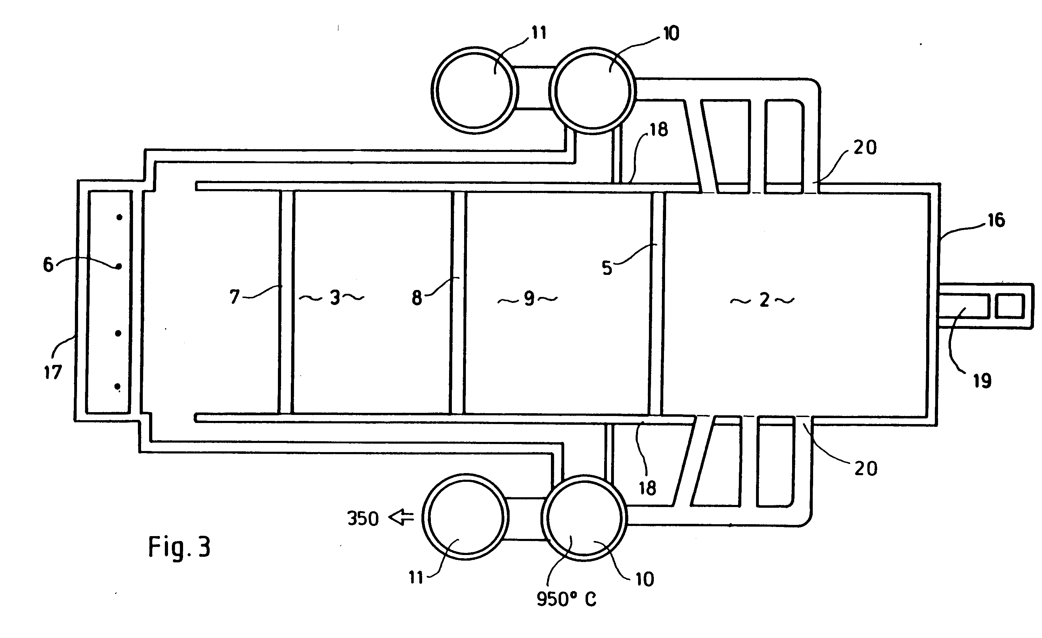

Figur 3    einen Horizontalschnitt durch eine andere Ausführungsform einer erfindungsgemäßen Wanne.

Gemäß den Figuren besteht der erfindungsgemäße Glasschmelzofen aus einer länglichen, rechteckigen Wanne mit einem Läuterteil 2 und einem Schmelzteil 3, die ineinander übergehen. Als Läuterteil 2 wird derjenige flache Wannenteil bezeichnet, in welchem die Brenner 20 angeordnet sind, die zur Verfeuerung von Öl der Gas dienen.

Die Wanne weist weiterhin brennerseitig eine Querwand 16, gemengeaufgabeseeitig eine Querwand 17 und Längswände 18 auf. Der Oberofen wird von einer Decke 1 gebildet. Der Schmelzteil-Boden ist mit 9 bezeichnet.

Im Schmelzteil (Zone II) 3 sind Bodenelektroden 6 angeordnet, die ein Einfrieren des Glasbades in diesem Bereich, insbesondere im direkten Bereich der Gemengeauflage verhindern. Das Einfrieren wird weiterhin dadurch verhindert, daß innerhalb des Schmelzteils 3 eine Oberflächenströmung eingestellt wird, die laufend hocherhitztes Glas aus dem von den Brennern 20 hocherhitzten Läuterteil 2 in den Bereich der Gemengeaufgabe befördert.

Die Gemengeaufgabe erfolgt in herkömmlicher Weise auf der ganzen Breite der Querwand 17.

Im einzelnen ist die Wanne entsprechend herkömmlicher Technik aufgebaut, wie sie auch in älteren Anmeldungen der Anmelderin beschrieben wird, so daß auf eine weitergehende Beschreibung verzichtet werden kann. Dies gilt insbesondere für die Gestaltung der Wandungen, des Gewölbes, des Bodens, der Brenner, der Elektroden sowie des Auslasses 19 am gemengeaufgabenfernen Ende des Homogenisierungsteils 2a und für die Gestaltung der Abgasaustrittsöffnungen 22 direkt neben der Gemengeaufgabe.

Im Wanneninneren ist am aufgabenseitigen Ende des Läuterteils 2 ein Strahlungsschutzwall 5 angeordnet, der von der Decke bis dicht über die Badoberfläche 4 reicht und verhindert, daß Strahlung in den Schmelzteil 3 gelangt. Wie bekannt, wird bei hohen Kammertemperaturen der größte Teil der Energie durch Strahlung übertragen und es ist daher erfindungswesentlich, die durch die Brenner 20 zugeführte Energie im Läuterteil 2 zu konzentrieren.

Da weitere beträchtliche Strahlungsmengen von der Badoberfläche und insbesondere von dem Strahlungs-Schutzwall 5 zur Aufgabeseite hin wirksam sind, weist der Schmelzteil 3 noch einen weiteren Strahlungsschutzwall 7 in der Nähe der Gemengeaufgabe und zwischen den Schutzwällen 5 und 7 einen weiteren Schutzwall 8 auf. Durch diese Anordnung wird sicher verhindert, daß nennenswert Strahlungsenergie zur Gemengeaufheizung dient, sondern dieses soll praktisch ausschließlich durch das Abgas erfolgen, welches aus dem Läuterteil 2 durch das Schmelzteil 3 zu den Abgasaustrittsöffnungen 22 strömt.

Fakultativ kann der Boden 9 am aufgabeseitigen Ende des Läuterteils 2 eine Schwelle 14 aufweisen. Wesentlich ist aber der zur Gemengeaufgabe hin gleichmäßig abfallende Boden, der ein Strömungsbild einstellt, in welchem Heißglas an der Badoberfläche zurück zur Gemengeauflage strömt und dort in Verbindung mit den Bodenelektroden 6 ein Einfrieren des Glases verhindert. Der Boden im Läuterteil 2 ist waagerecht angeordnet.

Das auf ca. 900° C abgekühlte Abgas wird nach Austritt aus der Wanne Rekuperatoren zugeführt, aus welchen es mit einer Temperatur von ca. 150 - 250° C austritt. Bei dieser Temperatur ist die dem Abgas innewohnende Energie weitgehend auf die Verbrennungsluft übergegangen.

In den Rekuperatoren wird durch das abkühlende Abgas die Verbrennungsluft von Normaltemperatur auf eine Temperatur von ca. 700° C vorgewärmt und dann über Rohrleitungen den Brennern 20 zugeführt. Die aufgrund der relativ geringen Lufttemperaturen erfolgende Verbrennung weist den Vorteil auf, daß die Flammtemperaturen relativ niedrig sind und daher höhere Konzentration von $NO_x$ nicht auftreten können. Das Abgas ist also nicht nur weit abgekühlt, sondern weist auch äußerst geringe Konzentrationen von $NO_x$ auf, so daß ein Betrieb des erfindungsgemässen Glasschmelzofens auch in Gebieten mit geringen Emissionswerten, z.B. in Städten, möglich ist, zumal der Einsatz eines Staubfilters aufgrund der geringen Abgastemperaturen leicht möglich ist.

Vom Betrieb der Wanne her ist es wichtig, daß das Schmelzteil 3 in seinem aufgabeseitigem Ende ausschließlich zur Gemengevorwärmung dient und ein wesentliches Einschmelzen des Gemenges erst am brennerseitigen Ende des Schmelzteils 3 erfolgt, wobei dann im Läuterteil 2 ein Läutern des Glases stattfindet, bevor dieses durch einen Bodenauslaß 19 in bekannter Weise abgezogen wird.

Im Läuterteil 2 sind eine Anzahl von "bubblern" angeordnet, die Luft durch den Boden einleiten können. Durch diese Luft wird - gegebenenfalls unter Mithilfe von Bodenelektroden - eine starke Umwälzung des Glases im Läuterteil 2 erreicht, so daß sich innerhalb des Läuterteils von oben nach unten nur ein sehr geringer Temperaturgradient einstellen kann. Dadurch wird sichergestellt, daß die Bodenoberfläche Temperaturen von etwa 1550 - 1560° C erreicht, wobei die Gewölbetemperatur des Gewölbes übere dem Läuterteil 2 Temperaturen von 1580° C nicht überschreitet. Die Temperaturen im Schmelzteil 3 sind demgegenüber erheblich geringer, sie betragen von der Gemengeaufgabe zum Läuterteil 2 hin 1100 bis 1300° C.

Im Homogenisierungsteil 2a erfolgt die Homogenisierung des Glases unter Abkühlung, so daß sich eine optimale Temperaturschichtung einstellt, die umlaufende Strömungen und damit das Einbringen von Verunreinigungen in den Auslaß 19 verhindert.

Durch die Strahlungsschutzwälle 5, 7 und 8 wird eine Gasgeschwindigkeit über dem Gemenge von ca. 10 - 15 m/s eingestellt, die neben der Strahlungswärmeübertragung auch noch eine gewisse konvektive Wärmeübertragung erlaubt. Die Strahlungsschutzwälle sind dabei z.B. entsprechend scheidrechten Bögen wie bei großen Doghausbögen aufgebaut.

Die zugeführte elektrische Energie kann weiterhin derartig im Verhältnis zu der durch die Brenner zugeführten Energie gewählt werden, daß der $NO_x$-Massenstrom die zulässigen Werte nicht überschreitet. Bei höherem Anteil der elektrischen Energie sinkt dabei der $NO_x$-Massenstrom und steigt bei Verringerung des Anteils an.

Der erfindungsgemäße Glasschmelzofen kann wirtschaftlich hergestellt werden, da im Gemengeaufgabeteil aufgrund der geringeren Temperaturen kostengünstiges Feuerfestmaterial eingesetzt werden kann.

Es liegt im Wesen der Erfindung, daß der gesamte Glasschmelzofen, die Leitungen für das Abgas und für die erwärmte Verbrennungsluft stark isoliert werden. Trotzdem ist es für den Fachmann überraschend, daß der spezifische Energieverbrauch auf den bisher unerreichten Wert von 3100 - 3400 kjoule/kg Glas verringert werden kann.

In dem als Zone I bezeichneten Läuterteil werden die Brenner mit Luftunterschuß gefahren, so daß eine Stickoxydbildung ($NO_x$-Bildung) praktisch nicht auftritt, da die Verbrennung unvollständig ist. Die Brenngase gelangen dann in die Zone II, nämlich den Schmelzteil und dort im strömungsmäßigen Beginn der Zone II, in welcher bereits eine um ca. 150° C geringere Temperatur als in der Zone I herrscht, werden die Brenner zur Erzielung einer vollständigen Verbrennung der zugeführten Kohlenwasserstoffe mit Luftüberschuß gefahren, so daß ein Wirkungsgradverlust vermieden wird. Aufgrund der hier herrschenden wesentlich geringeren Temperatur tritt ebenfalls praktisch keine $NO_x$ auf, so daß die Abgase beim Eintritt in die Atmosphäre praktisch $NO_x$-frei sind. Der erfindungsgemäße Glasschmelzofen kann also auch vorteilhaft in dicht besiedelten Gebieten arbeiten.

Weiter ist wesentlich, daß mit einem Gemisch aus einem hohen Anteil von Scherben und einem Rest des üblichen Gemenges gefahren wird, so daß es möglich ist, den Ofen mit billigen Grundstoffen zu betreiben. Durch die immer größer werdenden zurückgeführten Altglasmengen, welche zur Zeit noch nicht nach Farben getrennt werden können, gelangen Scherben mit unterschiedlichem Oxidationspotential in die Schmelzwanne. Bei der Reaktion von Gläsern mit unterschiedlichem Oxydationspotential miteinander entsteht ein starker Schaum auf der Badoberfläche, welche die Flammenstrahlung reflektiert und den Wärmeübergang ins Glasbad stark behindert.

Dieser Schaum kann durch reduzierende Feuerführung stark vermindert werden, so daß die neue Wanne unter den ungünstigen Verhältnissen bei Einsatz großer Mengen Altglas günstiger arbeitet als konventionelle Wannen.

**Patentansprüche**

1. Energiesparendes Verfahren zum Schmelzen von Glas in einem Glasschmelzofen, in dem das Gemenge in einem Schmelzteil (3) aufgeschmolzen, in einem an das Schmelzteil (3) anschließenden Läuterteil (2) geringer Badtiefe geläutert, danach in einem daran anschließenden Homogenisierungsteil (2a) erhöhter Badtiefe homogenisiert und daraus abgezogen wird, wobei der Abzug der Brenngase und die Gemengeeingabe am Anfang des Schmelzteils (3) erfolgt und unter der Gemengeeingabe Energie durch Elektroden (6) zugeführt wird, mit im Läuterteil angeordneten Brennern (20) zur Zuführung von Energie, mit Wärmeaustauschern (10, 11) zum Energieaustausch zwischen den Verbrennungsgasen und der den Brennern (20) zugeführten Verbrennungsluft, dadurch gekennzeichnet, daß die überwiegende Schmelzenergiezuführung durch Brenner (20) fossilen Brennstoffs im Läuterteil (2) erfolgt, die Rauchgase den Schmelzteil (3) im Gegenstrom zu dem Gemenge überstreichen, nahe der Gemengeaufgabe abgezogen werden und das Schmelzteil (3) an der Oberfläche (4) durch eine aus dem Läuterteil (2) kommende Strömung im Gegenstrom zu dem Gemenge durchströmt wird und daß Maßnahmen (5, 7, 8) vorhanden sind, die die Flammstrahlung aus dem Läuterteil (2) an dessen Grenze und über dem Schmelzteil (3) absorbieren, wodurch der Raum über der Schmelze in Zonen unterschiedlicher Temperatur unterteilt wird, in denen die höchste Temperatur im Läuterteil (2) vorliegt.

2. Verfahren nach Anspruch 1, dadurch gekennzeichnet, daß im Läuterteil (2) (Zone I) mit der höchsten Temperatur die Brenner (20) zur Verringerung der Stickoxydbildung mit Luftunterschuß und in dem von der Rauchgasströmung her gesehen nächsten Teil (Zone II) geringerer Temperatur die an der Einströmung angeordneten Brenner (20) zur Vervollständigung der Verbrennung mit Luftüberschuß gefahren werden.

3. Verfahren nach Anspruch 2, dadurch gekennzeichnet, daß die Temperatur in Zone II um ca. 150° C unter der der Zone I eingestellt wird.

4. Verfahren nach einem der Ansprüche 1 bis 3, dadurch gekennzeichnet, daß das Gemenge einen hohen Anteil von Scherben enthält.

5. Verfahren nach Anspruch 4, dadurch gekennzeichnet, daß die Rauchgase nach dem Austritt aus den Wärmetauschern (10, 11) die Scherben durchströmen und dabei bis auf eine Temperatur oberhalb des Taupunktes der in ihnen enthaltenen Bestandteilen abgekühlt werden.

6. Glasschmelzofen zur Durchführung des Verfahrens nach einem der Ansprüche 1 bis 5, mit einem Schmelzteil (3), einem an das Schmelzteil (3) anschließenden Läuterteil (2) geringer Badtiefe, einem daran anschließenden Homogenisierungsteil (2a) erhöhter Badtiefe und einem Auslaß (19) für das Glas, mit einer am Anfang des Schmelzteils (3) angeordneten Einrichtung zur Aufgabe des Gemenges und unter der Gemengeaufgabe angeordnete Elektroden (6) zur Zuführung von Energie, mit im Läuterteil angeordneten Brennern (20) zur Zuführung von Energie, mit Wärmeaustauschern (10, 11) zum Energieaustausch zwischen den Verbrennungsgasen und der den Brennern (20) zugeführten Verbrennungsluft, dadurch gekennzeichnet, daß zur Ausbildung der heißen Strömung als Gegenstrom zur Gemengebewegung der Schmelzteil-Boden (9) vom Läuterteil (2) zur Gemengeeingabe hin abfällt und die Decke (1) des Ofens zwischen dem Läuterteil (2) (Zone I) und dem Schmelzteil (3) (Zone II) mindestens einen sich bis kurz über die Badoberfläche (4) erstreckenden Strahlungsschutzwall (5) aufweist.

7. Glasschmelzofen nach Anspruch 6, dadurch gekennzeichnet, daß der Abfall über die Länge des Schmelzteils (3) stetig erfolgt und der Boden des Läuterteils (2) waagerecht verläuft.

8. Glasschmelzofen nach einem der Ansprüche 6 oder 7, dadurch gekennzeichnet, daß in dem Schmelzteil (3) mindestens ein weiterer Strahlungsschutzwall (7) vorhanden ist.

9. Glasschmelzofen nach einem der Ansprüche 6 bis 8, dadurch gekennzeichnet, daß die Wärmetauscher als Rekuperatoren ausgebildet in einen Hoch- und einen Niedertemperaturteil (10 und 11) geteilt sind.

10. Glasschmelzofen nach Anspruch 7, dadurch gekennzeichnet, daß im Boden (9) des Läuterteils (2) oder Schmelzteils (3) Mittel zum Einblasen von Luft (bubbler) eingebaut sind.

**Claims**

1. Economical method of melting glass in a glass-melting furnace, in which the raw mixture is melted in a melting unit (3), is refined in a shallow refining unit (2) adjacent to the melting unit (3), and is subsequently homogenized in and, thereafter, drawn off an homogenizing unit (2a) of greater depth lying next to the refining unit (2), whereby the exhaust gas vent and the raw mixture input lie at the top-end of the melting unit (3) and, under the raw mixture input, energy is introduced via electrodes(6) and burners (20) for introducing energy are disposed in the refining unit (2), with heat exchangers (10, 11) for transferring energy between the exhaust gases and the combustion air to be fed to the burners (20), characterized in that the preponderent amount of the energy for melting originates from the introduction of heat energy by fossil fuel burners (20) in the refining unit (2), that the exhaust gases flow over the melting unit (3) in the opposite direction to that of the raw mixture current, escape close to the raw mixture input and the gas flow moving in the opposite direction to the raw mixture current flows over the entire surface (4) of the melting unit (3) and that provisions are made to absorb at its boundary and above the melting unit (3) the flame radiation from the refining unit (2), whereby the space above the hot glass melting is subdivided in zones with differing temperatures, among which the highest temerature is present in the refining unit (2).

2. Method according to patent claim 1, characterized in that in the refining unit (2) (zone I) with the highest temperature, the burners (20) are operated with reduced quantities of air, in order to decrease the formation of nitric oxides and in the adjacent unit (zone II), as seen from the perspective of the exhaust gas flow, with its lover temperature, the burners (20) disposed at the inflow are operated with excess air to complete the combustion.

3. Method according to claim 2, characterized in that the temperature in zone II is set at approximately 150°C lower than that in zone I.

4. Method according one of the claims 1 to 3, characterized in that the raw mixture contains a large portion of recycled glass.

5. Method according to claim 4, characterized in that, after their exit from the heat exchangers (10, 11), the exhaust gases flow through the old glass and are cooled to a temperature equivalent to the condensation point of their components.

6. Glass-melting furnace for the implementation of the method according to claims 1 to 5 with a melting unit (3), a shallow refining unit (2) adjacent to the melting unit (3) and a homogenizing unit (2a) with a deeper vat, the whole connected to the refining unit (2) and furnished with an glass outlet (19), with a device for introducing the raw mixture situated at the top end of the melting unit (3) and, ordered below the raw mixture input, elec tordes (6) for introducing energy, with burners (20) in the refining unit (2) for introducing energy, with heat exchangers (10, 11) for energy exchange between the fuel exhaust gases and the combustion air to be fed into the burners, characterized in that, in order to develop a hot gas flow as a countercurrent to the movement of the raw mixture at the bottom of the melting unit (9) from the refining unit (2) towards the raw mixture input point and that the ceiling (1) of the furnace between the refining unit (2) (zone I) and the melting unit (3) (zone II) is furnished with at least one heat radiation shield extending to a point immediately above the operasting surface.

7. Glass-melting furnace according to claim 6, characterized in that the evenly inclined bottom extends over the whole length of the melting unit (3) and the bottom of the refining unit (2) is horizontal.

8. Glass-melting furnace according to either of the claims 6 or 7, characterized in that the melting unit (3) is furnished with at least one heat radiation shield (7).

9. Glass-melting furnace according to one of the claims 6 to 8, characterized in that the heat exchangers are recuperators equipped with both a high temperature and a low temperature section (10 and 11).

10. Glass-melting furnace according to claim 7, characterized in that the bottoms (9) of the refining unit (2) and the melting unit (3) are furnished with means of injecting air (bubblers).

**Revendications**

1. Procédé économisant l'énergie destinée à la fusion du verre dans un four de fusion de verre dans lequel le mélange est mis en fusion dans une partie (3) réservée à la fusion, et affiné dans une partie (2) de travail qui fait suite à la partie (3) réservée à la fusion, puis homogénéisé dans une partie (2a) où se fait l'homogénéisation dont la profondeur de bain est plus importante, puis est évacué à partir de celle-ci, l'extraction des gaz d'échappement et le chargement du mélange étant effectués dans la zone initiale de la partie (3) réservée à la fusion et de l'énergie étant fournie sous la charge de mélange au moyen d'électrodes (6), le four de fusion de verre comportant des brûleurs (20) disposés dans la partie d'affinage en vue d'effectuer un apport d'énergie, comportant des échangeurs de chaleur (10, 11) destinés à l'échange d'énergie entre les gaz de combustion et l'air de combustion alimentant les brûleurs (20), caractérisé en ce que l'alimentation prépondérante en énergie de fusion s'effectue au moyen de brûleurs (20) de combustible fossile dans la partie d'affinage (2), en ce que les gaz de fumée parcourent la partie (3) réservée à la fusion à contre-courant par rapport au mélange et sont extraits à proximité de l'emplacement de chargement et en ce que la partie (3) réservée à la fusion est parcourue, juste sur sa surface 4 par un écoulement venant de la partie d'affinage (2) à contre-courant par rapport au mélange, et que des dispositifs (5, 7, 8) sont prévus pour absorber le rayonnement des flammes provenant de la partie d'affinage (2), à la limite de celle-ci et au-dessus de la partie (3) réservée à la fusion, l'espace existant au-dessus du verre en fusion étant subdivisé en zones de températures différentes, dans lesquelles c'est dans la partie d'affinage (2) que règne la température la plus élevée.

2. Procédé selon la revendication 1, caractérisé en ce que dans la partie de travail (2) (zone I) où règne la température la plus élevée, on fait fonctionner les brûleurs (20) avec un déficit en air en vue de réduire la formation d'oxyde d'azote et en ce que, dans la partie suivante (zone II) considérée dans le sens de l'écoulement des gaz de fumés, là où règne une température plus faible, on fait fonctionner avec un excès d'air les brûleurs (20) disposés à l'entrée de l'écoulement afin de parfaire la combustion.

3. Procédé selon la revendication 2, caractérisé en e que la température qui règne dans la zone II est réglée à environ 150°C en-dessous de celle qui règne dans la zone I.

4. Procédé selon les revendications 1 à 3, caractérisé en ce que le mélange contient une proportion importante de tessons.

5. Procédé selon la revendication 4, caractérisé en ce que les gaz de fumée traversent les tessons après la sortie des échangeurs de chaleur (10, 11) et y sont refroidis à une température qui se situe au-dessus du point de rosée des constituants qu'ils contiennent.

6. Four de fusion de verre destiné à l'exécution du procédé selon l'une des revendications 1 à 5, comportant une partie (3) réservée à la fusion, une partie d'affinage (2) qui fait suite à la partie (3) pour la fusion et dont la profondeur de bain est plus faible, une partie (2a) réservée à l'homogénéisation qui fait suite à celle-ci et dont la profondeur de bain est plus importante ainsi qu'un orifice de sortie (19) destiné au verre, doté d'un dispositif de chargement de mélange installé au début de la partie (3) réservée à la fusion et d'électrodes (6) disposées sous l'emplacement de chargement de mélange, en vue d'un apport d'énergie, d'échangeurs de chaleur (10, 11) destinés à l'échange d'énergie entre les gaz de combustion et l'air de combustion alimentant les brûleurs (20), caractérisé en ce qu'en vue de générer l'écoulement chaud à contre-courant du déplacement du mélange, le plan de sole (9) de la partie pour la fusion s'abaisse à partir de la partie d'affinage (2) jusqu'à l'emplacement de chargement de mélange et en ce que le plafond (1) du four présente entre la partie d'affinage (2) (zone I) et la partie (3) réservée à la fusion (zone II) au moins une paroi (5) de protection contre le rayonnement qui s'étend jusque légèrement au-dessus de la surface (4) du bain.

7. Four de fusion de verre selon la revendication 6, caractérisé en ce que la déclivité s'étend de façon régulière sur toute la longueur de la partie (3) de fusion et en ce que la sole de la partie d'affinage (2) est horizontale.

8. Four de fusion de verre selon l'une des revendications 6 ou 7, caractérisé en ce que dans la partie (3) pour la fusion, il existe au moins une autre paroi (7) de protection contre le rayonnement.

9. Four de fusion de verre selon l'une des revendications 6 à 8, caractérisé en ce que les échangeurs de chaleur, conçus pour être des récupérateurs, sont divisés en une partie à haute température et en une partie à basse température (10 et 11).

10. Four de fusion de verre selon la revendication 7, caractérisé en ce que dans la sole (9) de la partie d'affinage (2) ou de la partie (3) réservée à la fusion sont incorporés des moyens de soufflage d'air (bouillonneurs).

Fig.1

EP 0 293 545 B1

Fig. 2

EP 0 293 545 B1

Fig. 3

350 ⇐

950° C

EP 0 293 545 B1